# EUROPÄISCHE PATENTANMELDUNG

(11) **EP 2 639 929 A2**
(43) Veröffentlichungstag der Anmeldung: **18.09.2013**
(21) Anmeldenummer: 13154092.4
(22) Anmeldetag: 05.02.2013
(51) Int. Cl.: H02J 13/00

(54) **Busgerät für ein Bussystem der Gebäudeinstallationstechnik sowie Verfahren zum Betreiben eines Busgerätes für ein Bussystem der Gebäudeinstallationstechnik**

(30) Priorität: 15.03.2012 DE 102012204077
(71) Anmelder: Siemens Aktiengesellschaft, 80333 München (DE)
(72) Erfinder: Fichtner, Norbert, 84069 Schierling (DE)

(57) **Zusammenfassung**

Die vorliegende Erfindung betrifft ein Busgerät (3) für ein Bussystem (1) der Gebäudeinstallationstechnik, aufweisend einen Busankoppler (10), wobei der Busankoppler (10) zum Ankoppeln des Busgerätes (3) an den Bus (2) des Bussystem (1) ausgebildet ist, ein Anwendungsmodul (20), eine Stromversorgung (11) zumindest für das Anwendungsmodul (20) und eine leitende Verbindung (12) zwischen dem Anwendungsmodul (20) und der Stromversorgung (11), wobei insbesondere eine Aktivierungseinheit (13) vorgesehen ist, die zum Schließen und Öffnen (14) der leitenden Verbindung (12) basierend auf einem Signal ausgebildet ist. Ferner betrifft die Erfindung ein Verfahren zum Betreiben eines Busgerätes (3) für ein Bussystem (1) der Gebäudeinstallationstechnik.

## Beschreibung

Die vorliegende Erfindung betrifft ein Busgerät für ein Bussystem in der Gebäudeinstallationstechnik, aufweisend einen Busankoppler, ein Anwendungsmodul und eine Stromversorgung zumindest für das Anwendungsmodul sowie ein Verfahren zum Betreiben eines Busgerätes für ein Bussystem in der Gebäudeinstallationstechnik.

In einem Bussystem kann für verschiedenste Aufgaben eine Vielzahl von Busgeräten vorgesehen sein. Die Busgeräte lassen sich dabei insbesondere in Aktoren und Sensoren unterscheiden. Dabei ist insbesondere ein im Busgerät verbautes Anwendungsmodul für die Funktion des Busgerätes, das heißt ob das Busgerät ein Aktor oder ein Sensor ist, ausschlaggebend. Dabei werden als Aktor ausgebildete Busgeräte insbesondere dafür verwendet, Elemente der Gebäudeinstallationstechnik, wie beispielsweise Leuchtelemente, Türen, Sonnenschutzeinrichtungen oder ähnliches, anzusteuern. Als Sensor ausgebildete Busgeräte liefern insbesondere Daten und Parameter über die Umgebung, beispielsweise Temperatur, Helligkeit, Feuchtigkeit der Luft und/oder eine Kontrolle von Zugängen zu einem Gebäude. Oftmals kommt es dabei vor, dass die einzelnen Busgeräte nur zu bestimmten Zeiten benötigt werden. Bei bekannten Busgeräten sind jedoch die Busgeräte auch zu Zeitpunkten aktiv, in denen sie aktuell nicht benötigt werden. Ein stetiger Energieverbrauch durch das Busgerät ist die Folge. Darüber hinaus ergibt sich beispielsweise bei aktiv sendenden, als Sensor ausgebildeten, Busgeräten, eine Bustelegrammgrundlast, die bereits den Bus des Bussystems erheblich belegt und im ungünstigsten Fall zur Verlängerung von Reaktionszeiten des Bussystems führen kann.

Es ist Aufgabe der vorliegenden Erfindung, die voranstehend beschriebenen Nachteile bekannter Busgeräte für ein Bussystem in der Gebäudeinstallationstechnik sowie bekannter Verfahren zum Betreiben eines Busgerätes für ein Bussystem der Gebäudeinstallationstechnik zumindest teilweise zu beheben. Insbesondere ist es Aufgabe der vorliegenden Erfindung, ein Busgerät für ein Bussystem der Gebäudeinstallationstechnik sowie ein Verfahren zum Betreiben eines Busgerätes für ein Bussystem der Gebäudeinstallationstechnik zur Verfügung zu stellen, die in kostengünstiger und einfacher Weise den Energieverbrauch beim Betrieb eines derartigen Busgerätes senken.

Voranstehende Aufgabe wird gelöst durch ein Busgerät für ein Bussystem der Gebäudeinstallationstechnik mit den Merkmalen des Anspruchs 1 sowie durch ein Verfahren zum Betreiben eines Busgerätes für ein Bussystem der Gebäudeinstallationstechnik mit den Merkmalen des Anspruchs 9. Weitere Merkmale und Details der Erfindung ergeben sich aus den Unteransprüchen, der Beschreibung und den Zeichnungen. Dabei geltend Merkmale und Details, die im Zusammenhang mit dem erfindungsgemäßen Busgerät beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Busgerät für ein Bussystem der Gebäudeinstallationstechnik, aufweisend einen Busankoppler, wobei der Busankoppler zum Ankoppeln des Busgerätes an den Bus des Bussystems ausgebildet ist, ein Anwendungsmodul, eine Stromversorgung zumindest für das Anwendungsmodul und eine leitende Verbindung zwischen dem Anwendungsmodul und der Stromversorgung, gelöst. Insbesondere ist das erfindungsgemäße Busgerät für ein Bussystem der Gebäudeinstallationstechnik derart ausgestaltet, dass eine Aktivierungseinheit vorgesehen ist, die zum Schließen und Öffnen der leitenden Verbindung basierend auf einem Signal ausgebildet ist.

Ein erfindungsgemäßes Busgerät kann dabei für alle gängigen Bussysteme der Gebäudeinstallationstechnik, wie beispielsweise KNX-Bus, eingesetzt werden. Durch das im Busgerät verbaute Anwendungsmodul kann das Busgerät dabei sowohl die Funktion eines Sensors oder als Aktors erfüllen. Beispielsweise kann dabei das erfindungsgemäße Busgerät als Aktor zur Steuerung einer Heizung, einer Lichtinstallation oder einer Zugangskontrolle eingesetzt werden. Als Sensor kann das Busgerät beispielhaft das Messen einer Temperatur, einer Helligkeit oder der Öffnungszustand eines Zugangs des Gebäudes ausführen. Durch das Vorsehen einer Aktivierungseinheit im Busgerät ist es möglich, das im erfindungsgemäßen Busgerät verbaute Anwendungsmodul nur im Bedarfsfall mit Strom zu versorgen. Dies kann insbesondere durch das Schließen beziehungsweise Öffnen der leitenden Verbindung zwischen einer Stromversorgung und dem Anwendungsmodul erreicht werden. Dadurch ist es möglich, einen unnützen Stromverbrauch durch das Anwendungsmodul des Busgerätes zu verhindern, wenn für die Tätigkeit des Anwendungsmoduls oder des gesamten Busgerätes kein Bedarf besteht. Dabei ist es selbstverständlich möglich, dass das Anwendungsmodul bei geöffneter leitender Verbindung völlig stromlos ist oder sich nur in einem Stand-by-Modus befindet, in dem wenig bis sehr wenig elektrische Energie verbraucht wird. Durch das bedarfsabhängige Ein- beziehungsweise Ausschalten des Anwendungsmoduls ist somit eine deutliche Energieeinsparung gegenüber einem ständig betriebenen Anwendungsmodul möglich. Dadurch, dass die Aktivierungseinheit basierend auf einem Signal zum Schließen und Öffnen der leitenden Verbindung ausgebildet ist, kann eben dieses Schließen und Öffnen gesteuert werden. Durch die Energieeinsparung durch das bedarfsabhängige Einschalten des Anwendungsmoduls ergibt sich zusätzlich selbstverständlich auch eine Kostenersparnis.

Ferner kann bei einem erfindungsgemäßen Busgerät vorgesehen sein, dass das Busgerät zum Empfangen eines extern erzeugten Signals ausgebildet ist. Dadurch ist es möglich, das Busgerät durch ein außerhalb des Busgerätes erzeugten Signals insofern anzusteuern, dass durch das Signal im Busgerät die Aktivierungseinheit basierend auf dem Signal zum Schließen und Öffnen der leitenden Verbindung ausgelöst wird. Ein derartiges erfindungsgemäßes Busgerät kann somit sozusagen von außerhalb des Busgerätes aktiviert werden. Diese Aktivierung erfolgt insbesondere bevorzugt bedarfsangepasst. Beispielsweise kann eine Steuerungseinrichtung Daten eines Busgerätes benötigen, dessen Anwendungsmodul als Sensor ausgestaltet ist. In einem derartigen Fall kann durch die Steuerungseinrichtung ein Signal erzeugt werden, das an das Busgerät, beispielsweise über Funk, übermittelt wird. Durch dieses Signal wird die Aktivierungseinheit dahingehend beeinflusst, dass sie die leitende Verbindung zwischen der Stromversorgung und dem zumindest einen Anwendungsmodul, das in diesem Beispiel als Sensor ausgestaltet ist, schließt. Das Anwendungsmodul, das heißt der Sensor, wird somit erst dann mit Strom versorgt, wenn von der Steuerungseinrichtung ein Bedarf gemeldet ist. Ein Betrieb des Anwendungsmoduls ohne Bedarf, das heißt ohne Aufforderungssignal durch die Steuerungseinrichtung, kann in diesem Fall ausgeschlossen werden. Unnötiger Energieverbrauch kann so vermieden werden.

Darüber hinaus kann in einer Weiterentwicklung eines erfindungsgemäßen Busgerätes vorgesehen sein, dass das Busgerät zum Empfangen des externen Signals eine Schnittstelle, die insbesondere Teil des Busankopplers ist, aufweist. Die Schnittstelle kann dabei kabelgebunden oder kabelungebunden ausgestaltet sein. Da die Schnittstelle insbesondere als Teil des Busankopplers ausgebildet ist, ist es möglich, das Signal an die Aktivierungseinheit über den Bus zu schicken. Dies stellt eine besonders einfache Art und Weise der Kommunikation dar, da auf bereits vorhandene Strukturen zurückgegriffen werden kann. Das Bussystem weist insbesondere einen Bus und Busgeräte auf, die über den Bus kommunizieren. Somit sind sämtliche Voraussetzungen bereits vorhanden, um über den Bus das Signal an die Aktivierungseinheit zu senden. Zusätzliche Schnittstellen und andere Kommunikationseinrichtungen sind daher in einem derartigen Fall nicht nötig.

Ferner kann bei einem erfindungsgemäßen Busgerät vorgesehen sein, dass das Busgerät zum Erzeugen eines Signals ausgebildet ist. Ein derartig ausgebildetes erfindungsgemäßes Busgerät erzeugt damit das Signal für die Aktivierungseinheit intern. Das Empfangen eines externen Signals für die Aktivierungseinheit ist somit nicht nötig. Ein derartiges Busgerät kann somit besonders einfach ausgestaltet sein.

Darüber hinaus kann bei einem derartigen erfindungsgemäßen Busgerät vorgesehen sein, dass das Busgerät eine Zeitschaltung zum Erzeugen des Signals, insbesondere zum wiederholten Erzeugen des Signals, aufweist. Dies erlaubt insbesondere, dass das Busgerät periodisch, insbesondere in regelmäßig wiederkehrenden Abständen, aktiv wird. Dies ist insbesondere dann von Vorteil, wenn Parameter durch ein als Sensor ausgebildetes Anwendungsmodul überwacht werden sollen, die sich nicht schlagartig ändern, wie beispielsweise die Temperatur eines Raumes. Hier kann es beispielsweise günstig sein, die Raumtemperatur nur alle 10 Minuten zu messen. Zwischen den Messungen kann bei einem erfindungsgemäßen Busgerät die leitende Verbindung geöffnet und damit der Stromverbrauch des Anwendungsmoduls deutlich gesenkt werden.

In einer besonders bevorzugten Ausgestaltungsform eines erfindungsgemäßen Busgerätes kann vorgesehen sein, dass das Anwendungsmodul eine Sensoreinheit ist. Durch ein erfindungsgemäßes Busgerät erfolgt die Erfassung von Daten dabei nur bei Bedarf, wobei die Daten über ein Signal, das extern oder intern erzeugt werden kann, abgefragt werden. In den Zeiträumen, in denen kein Bedarf besteht, das heißt in denen kein Signal vorliegt, kann die leitende Verbindung zum Anwendungsmodul und damit zur Sensoreinheit geöffnet werden. Ein unnötiger Energieverbrauch kann dadurch vermieden werden.

Ferner kann bei einer Weiterentwicklung eines erfindungsgemäßen Busgerätes vorgesehen sein, dass die Sensoreinheit ein Helligkeitssensor, ein Temperatursensor, ein Bewegungssensor, ein Akustiksensor oder ein Zugangssensor ist. Durch ein derartig ausgestaltetes erfindungsgemäßes Busgerät sind somit die Überwachung und/oder die Vermessung einer Vielzahl von Umgebungsparametern denkbar. Insbesondere ist ein erfindungsgemäßes Busgerät dadurch ausgezeichnet, dass die Messung durch die Sensoreinheit nur dann erfolgt, wenn ein Bedarf für die Daten der Sensoreinheit vorliegt. Dies erlaubt einen besonders energiesparenden Betrieb eines erfindungsgemäßen Busgerätes.

Gemäß einem zweiten Aspekt der Erfindung wird die Aufgabe durch ein Verfahren zum Betreiben eines Busgerätes für ein Bussystem der Gebäudeinstallationstechnik, wobei das Busgerät einen Busankoppler, der zum Ankoppeln des Busgerätes an den Bus des Bussystems ausgebildet ist, ein Anwendungsmodul, eine Stromversorgung zumindest für das Anwendungsmodul und eine leitende Verbindung zwischen dem Anwendungsmodul und der Stromversorgung aufweist, gelöst. Insbesondere ist das erfindungsgemäße Verfahren zum Betreiben eines Busgerätes derart gekennzeichnet, dass durch eine Aktivierungseinheit die leitende Verbindung basierend auf einem Signal geöffnet oder geschlossen wird. Das Signal, das der Aktivierungseinheit aufzeigt, dass diese die leitende Verbindung öffnen oder schließen soll, zeigt insbesondere an, ob die vom Anwendungsmodul des Busgerätes zur Verfügung gestellte Funktionalität benötigt wird oder nicht. Vorteilhafterweise wird die leitende Verbindung nur dann geschlossen, wenn ein Bedarf für die Funktionalität des Anwendungsmoduls vorliegt. Nur bei geschlossener leitender Verbindung kann das Anwendungsmodul elektrische Energie für seine Funktionalität verbrauchen. Ein Energieverbrauch durch das Anwendungsmodul liegt somit insbesondere nur dann vor, wenn das Anwendungsmodul auch benötigt wird. Ein unnötiger Energieverbrauch, das heißt ein Energieverbrauch durch das Anwendungsmodul, wenn kein Bedarf für die Funktionalität des Anwendungsmoduls vorliegt, kann so vermieden werden. Somit wird durch ein erfindungsgemäßes Verfahren eine Energieeinsparung beim Betrieb eines Busgerätes ermöglicht. Ferner kann durch ein erfindungsgemäßes Verfahren dadurch auch die Kosteneffizienz beim Betreiben eines Busgerätes für ein Bussystem erhöht werden.

Ferner kann bei einem erfindungsgemäßen Verfahren vorgesehen sein, dass durch die Aktivierungseinheit die leitende Verbindung wiederholt, insbesondere periodisch, geöffnet oder geschlossen wird. Auf diese Art und Weise ist insbesondere eine Überwachung von Umgebungsparametern möglich, die sich nicht schlagartig ändern. Als Beispiele hierfür lassen sich etwa die Messung einer Raumtemperatur anführen. Da sich die Temperatur eines Raumes eines Gebäudes nicht schlagartig ändert ist es ausreichend, diese Temperatur etwa nur alle 10 Minuten zu messen. Dadurch, dass zwischen den Messungen die Aktivierungseinheit die leitende Verbindung zwischen dem als Sensor ausgebildeten Anwendungsmodul und der Stromversorgung für zumindest das Anwendungsmodul öffnen kann, kann ein unnötiger Stromverbrauch in diesen Zeiträumen vermieden werden.

Darüber hinaus kann bei einem erfindungsgemäßen Verfahren vorgesehen sein, dass das Busgerät das Signal empfängt und/oder das Signal erzeugt. Somit ist eine interne, das heißt im Busgerät ausgelöste, oder eine externe, das heißt außerhalb des Busgerätes ausgelöste, Ansteuerung der Aktivierungseinheit möglich. Eine externe Auslösung ist dabei insbesondere über den Busankoppler des Busgerätes, das heißt über den Bus des Bussystems, denkbar. Eine interne Auslösung kann beispielsweise durch einen Zeitgeber oder einen Schalter direkt am Busgerät hervorgerufen werden. Auch eine Fernsteuerung über eine kabelgebundene oder kabelungebundene Schnittstelle ist selbstverständlich denkbar.

Besonders bevorzugt kann bei einem erfindungsgemäßen Verfahren vorgesehen sein, dass das Verfahren durch ein Busgerät für ein Bussystem gemäß dem ersten Aspekt der Erfindung ausgeführt wird. Sämtliche Vorteile, die in Verbindung mit einem erfindungsgemäßen Busgerät beschrieben sind, gelten somit selbstverständlich auch für ein erfindungsgemäßes Verfahren zum Betreiben eines Busgerätes, das gemäß dem ersten Aspekt der Erfindung ausgebildet ist.

Die vorliegende Erfindung wird anhand der beigefügten Zeichnungsfiguren näher erläutert. Es zeigen schematisch:
- Figur 1: ein Bussystem in der Gebäudeinstallationstechnik gemäß dem Stand der Technik,
- Figur 2: ein erfindungsgemäßes Busgerät und
- Figur 3: eine Datenabfrage im Betrieb eines Bussystems mit einem erfindungsgemäßen Busgerät.

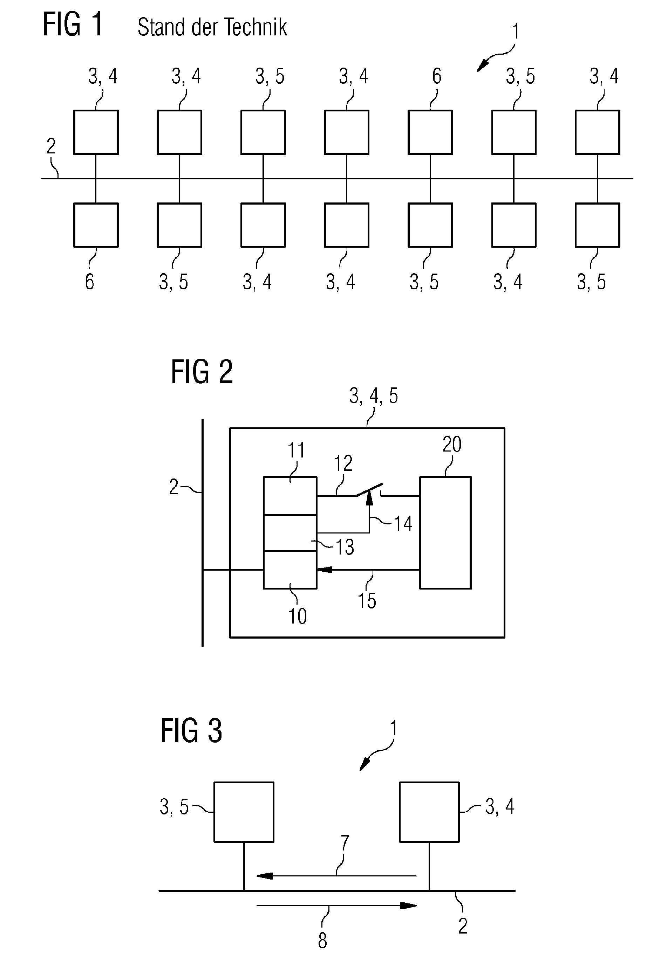

Elemente mit gleicher Funktion und Wirkungsweise sind in den Figuren 1 bis 3 jeweils mit denselben Bezugszeichen versehen.

Fig.1 zeigt ein Bussystem 1, das gemäß dem Stand der Technik ausgestaltet ist. Am Bus 2 des Bussystems 1 sind zwei Spannungsversorgungen 6 angeordnet. Diese Spannungsversorgungen 6 versorgen den Bus 2 des Bussystems 1 mit elektrischer Energie, die zum einen zum Betrieb des Busses 2 als auch zum Betrieb der Busgeräte 3 verwendet werden kann. Am Bus 2 ist ferner eine Vielzahl von Busgeräten 3 angeordnet, die als Aktoren 4 oder als Sensoren 5 ausgebildet sein können. Als Aktoren 4 sind hier beispielsweise die Steuerung einer Heizung, einer Beleuchtungseinrichtung oder eines Zuganges denkbar. Bei den Sensoren 5 ist zum Beispiel das Messen einer Temperatur, einer Helligkeit oder einer Bewegung denkbar. Bei Busgeräten 3 eines Bussystems 1, die gemäß dem Stand der Technik ausgebildet sind, sind Anwendungsmodule 20 (nicht mit abgebildet), die die einzelnen Busgeräte 3 als Aktoren 4 oder Sensoren 5 definieren, ständig mit einer im Busgerät 3 angeordneten Stromversorgung 11 (nicht mit abgebildet) über eine leitende Verbindung 12 (nicht mit abgebildet) verbunden. Es wird somit ständig elektrische Energie verbraucht, auch wenn für die Funktionalitäten der entsprechenden Anwendungsmodule 20 kein aktueller Bedarf besteht. Dies stellt einen unnötig hohen Energiebedarf eines Bussystems 1 mit derartigen Busgeräten 3 dar. Des Weiteren ergibt sich aufgrund von aktiv sendenden Sensoren 5 eine Datengrundlast auf dem Bus 2 die den Bus 2 bereits erheblich belegt und im ungünstigsten Fall zur Verlängerung von Reaktionszeiten des Bussystems 1 auf Anforderungen bedingt.

Fig. 2 zeigt ein Busgerät 3 das gemäß der Erfindung ausgestaltet ist. Das Busgerät 3, das über ein entsprechendes Anwendungsmodul 20 als Aktor 4 oder Sensor 5 ausgestaltet sein kann, ist über einen Busankoppler 10 am Bus 2 des Bussystems 1 angekoppelt. Im Busgerät 3 ist eine Stromversorgung 11 vorgesehen, die über eine leitende Verbindung 12 mit dem Anwendungsmodul 20 verbunden sein kann. Erfindungsgemäß ist im Busgerät 3 ferner eine Aktivierungseinheit 13 vorgesehen, die zum Schließen und Öffnen 14 der leitenden Verbindung 12 ausgestaltet ist. Die Aktivierungseinrichtung 13 kann dabei Teil des Busankopplers 10 sein. Dieses Schließen und Öffnen 14 wird dabei durch die Aktivierungseinheit 13 basierend auf einem Signal vorgenommen. Dieses Signal zeigt dabei insbesondere einen Bedarf für die Funktionalität des Anwendungsmoduls 20 an. Das Anwendungsmodul 20 wird somit nur in den Zeiten betrieben, in denen ein Bedarf für die Funktionalität des Anwendungsmoduls 20 vorherrscht. Beim Betrieb des Anwendungsmoduls 20 können dabei Daten 15 über den Busankoppler 10 auf den Bus 2 des Bussystems 1 gesendet werden. Bei den Daten 15 kann es sich dabei insbesondere um Messdaten, wenn das Anwendungsmodul 20 ein Sensor 5 ist, oder um Rückmeldungsdaten, wenn das Anwendungsmodul 20 ein Aktor 4 ist, handeln. Wird die Funktionalität des Anwendungsmoduls 20 nicht benötigt, ist vorzugsweise die leitende Verbindung 12 geöffnet. Das Anwendungsmodul 20 ist in einem derartigen Zustand entweder komplett stromlos gestaltet oder befindet sich in einem Stand-by-Modus, in dem es nur wenig elektrische Energie verbraucht. Durch den Einsatz eines erfindungsgemäßen Busgerätes 3 ist es somit möglich, das Anwendungsmodul 20 nur bedarfsbedingt zu betreiben. Dadurch wird ein besonders energiesparender Betrieb des Anwendungsmoduls 14 und damit des gesamten Busgerätes 3 ermöglicht. Mit der Einsparung an Energie geht selbstverständlich dabei auch eine Kostenersparnis einher. Das Signal, auf dem ein Schließen und Öffnen 14 der leitenden Verbindung 12 durch die Aktivierungseinheit 13 basiert, kann dabei sowohl intern im Busgerät 3 als auch extern erzeugt werden. Dabei sind beispielsweise ein Schalter am Busgerät 3 oder eine Schnittstelle zum Empfang des Signals denkbar. Besonders bevorzugt ist dabei ein Empfang des Signals über den Busankoppler 10 des Busgerätes 3. Dadurch kann insbesondere die Kommunikationsinfrastruktur, die durch den Bus 2 des Bussystems 1 bereits zu Verfügung gestellt ist, auch für die Signalübermittlung an die Aktivierungseinheit 13 verwendet werden.

In Fig. 3 ist ein möglicher Ablauf im Betrieb eines Bussystems 1 gezeigt. Die gezeigten Busgeräte 3 sind gemäß dem in Fig. 2 gezeigten Busgerät 3 ausgebildet. Ein Busgerät 3, das als Aktor 4 ausgestaltet ist, benötigt für die Steuerung des dem Aktor 4 nachgestalteten Gerätes eine aktuelle Datengrundlage. Daher kann durch das als Aktor 4 ausgebildete Busgerät 3 ein Datenanforderungstelegramm 7 an ein entsprechendes als Sensor 5 ausgebildetes Busgerät 3 gesendet werden. Dieses Datenanforderungstelegramm 7 wird über den Busankoppler 10 des als Sensor 5 ausgebildeten Busgerätes 3 empfangen und als Signal an die Aktivierungseinheit 13 dieses Busgerätes 3 weitergegeben. Durch die Aktivierungseinheit 13 wird intern im als Sensor 5 ausgebildeten Busgerät 3 die leitende Verbindung 12 zum als Sensor 5 ausgebildeten Anwendungsmodul 20 geschlossen und das Anwendungsmodul 20 so mit Strom versorgt. Das als Sensor 5 ausgebildete Anwendungsmodul 20 kann so die benötigten Daten messen und diese über den Bus 2 des Bussystems 1 als Datenantworttelegramm 8 zurück an den als Aktor 4 ausgebildetes Busgerät 3 zurücksenden. Im Anschluss wird die leitende Verbindung 12 durch die Aktivierungseinheit 13 wieder geöffnet. Das Anwendungsmodul 20 des als Sensor 5 ausgebildeten Busgerätes 3 verbraucht demnach nur elektrische Energie, wenn ein Bedarf für die Funktionalität, hier beispielsweise das Messen eines Umgebungsparameters, ein Bedarf besteht. Ein unnötiger Energieverbrauch durch einen Betrieb des Anwendungsmoduls 20 ohne Bedarf kann so vermieden werden. Zusammenfassend lässt sich sagen, dass durch die erfindungsgemäße Ausgestaltung eines Busgerätes, das heißt das bedarfsbasierte Betreiben des Anwendungsmoduls im Busgerät, eine deutliche Energieeinsparung möglich ist. Selbstverständlich geht dabei mit einer derartigen Energieeinsparung eine Kostenreduktion beim Betrieb eines Bussystems, das mit einem erfindungsgemäßen Busgerät ausgestaltet ist, einher. Auch kann sich, dadurch dass das Anwendungsmodul nicht ständig im Betrieb ist, die Lebensdauer eines erfindungsgemäßen Busgerätes verlängern.

Die voranstehende Erläuterung der Ausführungsformen beschreibt die vorliegende Erfindung nur im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Bussystem
- 2: Bus
- 3: Busgerät
- 4: Aktor
- 5: Sensor
- 6: Spannungsversorgung
- 7: Datenanforderungstelegramm
- 8: Datenantworttelegramm

- 10: Busankoppler
- 11: Stromversorgung
- 12: leitende Verbindung
- 13: Aktivierungseinheit
- 14: Schließen und Öffnen
- 15: Daten

- 20: Anwendungsmodul

## Patentansprüche

1. Busgerät (3) für ein Bussystem (1) der Gebäudeinstallationstechnik, aufweisend einen Busankoppler (10), wobei der Busankoppler (10) zum Ankoppeln des Busgerätes (3) an den Bus (2) des Bussystem (1) ausgebildet ist, ein Anwendungsmodul (20), eine Stromversorgung (11) zumindest für das Anwendungsmodul (20) und eine leitende Verbindung (12) zwischen dem Anwendungsmodul (20) und der Stromversorgung (11),
**dadurch gekennzeichnet,**
**dass** eine Aktivierungseinheit (13) vorgesehen ist, die zum Schließen und Öffnen (14) der leitenden Verbindung (12) basierend auf einem Signal ausgebildet ist.

2. Busgerät (3) nach Anspruch 1,
**dadurch gekennzeichnet,**
**dass** das Busgerät (3) zum Empfangen eines extern erzeugten Signals ausgebildet ist.

3. Busgerät (3) nach Anspruch 2,
**dadurch gekennzeichnet,**
**dass** das Busgerät (3) zum Empfangen des externen Signals eine Schnittstelle, die insbesondere Teil des Busankopplers (10) ist, aufweist.

4. Busgerät (3) nach wenigstens einem der vorhergehenden Ansprüche,
**dadurch gekennzeichnet,**
**dass** das Busgerät (3) zum Erzeugen eines Signal ausgebildet ist.

5. Busgerät (3) nach Anspruch 4,
**dadurch gekennzeichnet,**
**dass** das Busgerät (3) einen Schalter zum Erzeugen des Signals aufweist.

6. Busgerät (3) nach Anspruch 4 oder 5,
**dadurch gekennzeichnet,**
**dass** das Busgerät (3) eine Zeitschaltung zum Erzeugen des Signals, insbesondere zum wiederholten Erzeugen des Signals, aufweist.

7. Busgerät (3) nach wenigstens einem der vorhergehenden Ansprüche,
**dadurch gekennzeichnet,**
**dass** das Anwendungsmodul (20) eine Sensoreinheit (5) ist.

8. Busgerät (3) nach Anspruch 7,
**dadurch gekennzeichnet,**
**dass** die Sensoreinheit (5) ein Helligkeitssensor, ein Temperatursensor, ein Bewegungssensor, ein Akustiksensor oder ein Zugangssensor ist.

9. Verfahren zum Betreiben eines Busgerätes (3) für ein Bussystem (1) der Gebäudeinstallationstechnik, wobei das Busgerät (3) einen Busankoppler (10), der zum Ankoppeln des Busgerätes (3) an den Bus (2) des Bussystem (1) ausgebildet ist, ein Anwendungsmodul (20), eine Stromversorgung (11) zumindest für das Anwendungsmodul (20) und eine leitende Verbindung (12) zwischen dem Anwendungsmodul (20) und der Stromversorgung (11) aufweist,
**dadurch gekennzeichnet,**
**dass** durch eine Aktivierungseinheit (13) die leitende Verbindung (12) basierend auf einem Signal geöffnet oder geschlossen (14) wird.

10. Verfahren nach Anspruch 9,
**dadurch gekennzeichnet,**
**dass** durch die Aktivierungseinheit (13) die leitende Verbindung (12) wiederholt, insbesondere periodisch, geöffnet oder geschlossen (14) wird.

11. Verfahren nach Anspruch 9 oder 10,
**dadurch gekennzeichnet,**
**dass** das Busgerät (3) das Signal empfängt und/oder das Signal erzeugt.

12. Verfahren nach wenigstens einem der Ansprüche 9 bis 11,
**dadurch gekennzeichnet,**
**dass** das Verfahren durch ein Busgerät (3) nach wenigstens einem der Ansprüche 1 bis 8 ausgeführt wird.
